# EUROPEAN PATENT APPLICATION

(11) **EP 1 017 194 A2**
(43) Date of publication of application: **05.07.2000**
(21) Application number: 99500256.5
(22) Date of filing: 29.12.1999
(51) Int. Cl.: H04J 3/06

(54) **2.048 MHz clock converter to line signal at 2.048 Mbit/s**

(30) Priority: 30.12.1998 ES 9802716
(71) Applicant: Telefonica, S.A., 28013 Madrid (ES)
(72) Inventor: Marino Aunon, Jesus c/p Telefonica, S.A., 28013 Madrid (ES)
(74) Representative: Carpintero Lopez, Francisco

(57) **Abstract**

The clock converter from 2.048 MHz to a line signal at 2.048 Mbit/s is a unit meant to generate a PCM signal frame at 2.048 Mbit/s from a 2.048 MHz input clock. The PCM frame signal with Cyclic Redundancy Code (CRC) created by this unit, although it does not carry data traffic, does carry information on the phase of the input clock. It is provided with eight data outputs synchronised in phase with the 2.048 MHz input clock. The input interface as well as the eight PCM output frames comply with recommendations G.703, G.704 and G.706 of the ITU-T. In addition, it is provided with an alarm signal which is activated in the event that the 2.048 MHz clock signal disappears from the input of the converter.

## Description

### OBJECT OF THE INVENTION

The present invention relates to a clock converter from 2.048 MHz to a line signal at 2.048 Mbit/s, which provides essential novel characteristics and substantial advantages over known means used for similar purposes in the present state of the art.

More specifically, the present invention consists of a converter with eight data outputs with PCM frame at a 2.048 Mbit/s rate which are linked in phase with an input cock at 2.048 MHz, all of the above complying with recommendations of the International Telecommunications Union UIT-T G.703, G.704 and G.706.

The field of application of the present invention is telecommunications, more specifically synchronisation of switching and mobile telephony exchanges.

### BACKGROUND OF THE INVENTION

When transmission networks were part of the plesiochronic digital hierarchy, synchronisation reference signals for switching and mobile telephony exchanges were obtained from frames of tributary signals transmitted at a rate of 2.048 Mbit/s.

With the implementation of synchronous digital hierarchy in the transmission network it becomes necessary to synchronise the units of the transmission network. Synchronisation of these units is carried out using a master clock at 2.048 MHz, which is used as a reference for the entire network, and a transport network in charge of carrying the reference signal to every node in the network.

While the transport network remained plesiochronous, switching and mobile telephony exchanges obtained the synchronisation reference from data frames, PCM signals at 2.048 Mbit/s, which arrived via the input tributary signals of the exchange.

With the new situation created in network architecture with the appearance of the synchronous transport network, in which the reference synchronisation signal cannot travel on the tributaries as it did in the plesiochronous network, but does so on the line signals, so that synchronisation references are clocks and not data frames, it becomes necessary to use a clock converter from 2.048 MHz to a frame signal at 2.048 Mbit/s to synchronise switching and mobile telephony exchanges.

Known in the present state of the art are similar devices which carry out the described function, but which can only synchronise specific units and furthermore, synchronise a single unit per card. The present invention provides the substantial advantages of being capable of synchronising any electronic units, and as many as eight simultaneously.

The clock converter from 2.048 MHz to a line signal at 2.048 Mbit/s is a unit which generates eight output signals with a PCM frame structure at a rate of 2.048 Mbit/s, relying on an external input clock of 2.048 MHz.

Both the input and output interfaces fully comply with recommendations UIT-T G.703, G.704 and G.706 of the International Telecommunications Union (UIT).

In addition the converter provides information on the status of the input clock by means of an alarm which indicates whether this clock is present or not at its input.

The present invention comprises three large blocks: an input receiver, a frame generator and an output stage.

The input receiver module is in charge of adapting the impedance of the input coaxial cable to the input impedance of the converter unit, and of adapting the level of the line signal received at the converter input to input levels acceptable by the frame generator. For this purpose it is provided with an impedance adaptation network and a signal level converter.

The frame generator is in charge of creating a PCM frame with a Cyclic Redundancy Code (CRC) in which traffic present in data channels is at zero logic level, and of using the external clock received at the input as a clock source to generate the output frame. For this it is provided with a 2.048 Mbit/s hierarchy frame generator.

The output stage is meant to generate eight output frame signals in accordance with recommendations G.704 and G-706 of UIT-T, of adapting the output impedance of the unit to that of the coaxial output cable and of generating an alarm signal if the input clock disappears. It is thus comprised of a converter for internal data signals to line signal, a transformer for adapting output impedances of the unit to the impedance of the line to which it is connected and an alarm circuit which acts in the event that the external module input clock disappears.

### BRIEF DESCRIPTION OF THE DRAWINGS

Further characteristics and advantages of the present invention will more fully appear from the following detailed description of a preferred embodiment, for the purpose of illustration only and not intended as a definition of the limits of the invention, and made with reference to the attached drawings in which the following is shown:

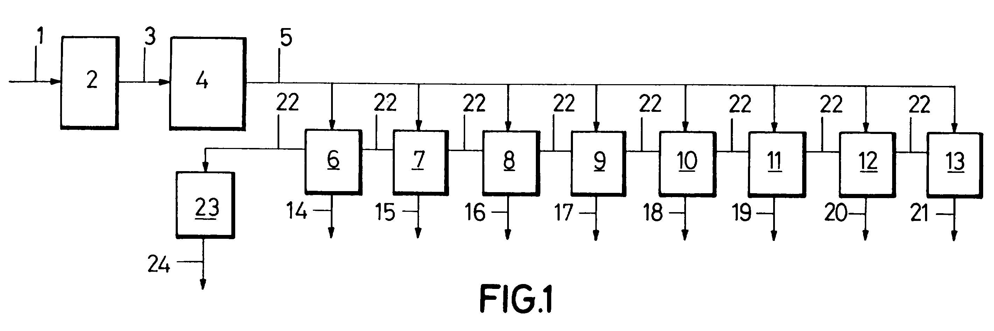

Figure 1 shows a block diagram of the clock converter from 2.048 MHz to a line signal at 2.048 Mbit/s according to the invention.

### DESCRIPTION OF A PREFERRED EMBODIMENT

In the detailed description of a preferred embodiment of the invention, constant reference will be made to the figures of the drawings, in figure 1 or the only figure of which is shown the detailed block diagram of the parts which comprise the clock converter from 2.048 MHz to a line signal at 2.048 Mbit/s , which generates eight data output frames with PCM structure at 2.048 Mbit/s from a 2.048 MHz input clock, following recommendations G.703 (physical and electrical characteristics of digital hierarchy interfaces), G.704 (Synchronous frame structures used in hierarchy levels of 1.544, 6.312, 2.048, 8.448 and 44.736 Mbit/s) and G.706 (Cyclic Redundancy Code (CRC) and frame alignment procedures relative to basic frame structures defined in recommendation G.704) of the International Telecommunications Union (ITU). It also provides information on the status of the input clock by an alarm which is activated if the clock disappears.

The operation of the converter is now described: input receiver (2) receives the signal from clock (1) of the external input source, adapts the impedance of the line signal at the input and transforms input clock levels to adapt them to acceptable values for the following circuit, which is frame generator (4).

Frame generator (4) creates an empty frame (5) with PCM structure and CRC, using for this the phase (3) of the input clock according to recommendations UIT-T G.704 and G.706.

Frame signal (6) is taken to the input of eight output stages (6-13) which provide respectively the output logic and electronic levels (14-21) according to recommendation UIT-T G.703 and which are required for connection to the units to be synchronised.

The output stages also provide an alarm signal (22) if clock (1) disappears form the unit input. This alarm signal is transformed into a luminous warning signal (24) by adapter (23).

## Claims

1. Clock converter from 2.048 MHz to a line signal at 2.048 Mbit/s for synchronisation of switching and mobile telephony exchanges characterised in that several output data frames are generated with PCM signal structure at 2.048 Mbit/s from a 2.048MHz clock (1) inputted to a receiver (2), at the output of which is connected a frame generator (4), which frame is sent to the input of output stages (6-13) for connection to units requiring synchronisation.

2. Clock converter from 2.048 MHz to a line signal at 2.048 Mbit/s as in claim 1, characterised in that input receiver (2) for the signal of the 2.048 MHz clock (1) adapts the impedance of the input coaxial cable to the input impedance of the unit, and converts the level of the line signal (1) received to input levels acceptable for the frame generator (4) included.

3. Clock converter from 2.048 MHz to a line signal at 2.048 Mbit/s as in claim 1, characterised in that frame generator (4) creates a PCM structure frame (5) with CRC (Cyclic Redundancy Code) for error correction at its output, using as a reference the phase (3) of the input clock and according to recommendations UIT-T G.704 and G.706 of the International Telecommunications Union.

4. Clock converter from 2.048 MHz to a line signal at 2.048 Mbit/s as in claim 1, characterised in that at output stages (6-13) are obtained the logic and electrical levels by means of a converter from internal data signals to line signal, according to recommendation UIT-T G.703, for connection to units requiring synchronisation and in addition by means of a transformer the output impedances of the unit are adapted to that of the output coaxial cable.

5. Clock converter from 2.048 MHz to a line signal at 2.048 Mbit/s as in claim 4, characterised in that said output stages generate an alarm signal (22) in the event that input clock (1) disappears from the converter input, which is transformed into a luminous failure signal (24) by an adapter (23).
